(19) Europäisches Patentamt / European Patent Office / Office européen des brevets

(11) **EP 3 926 803 B1**

(12) **EUROPEAN PATENT SPECIFICATION**

(45) Date of publication and mention
of the grant of the patent:
**24.09.2025 Bulletin 2025/39**

(21) Application number: **20180584.3**

(22) Date of filing: **17.06.2020**

(51) International Patent Classification (IPC):
*H02M 1/12* $^{(2006.01)}$    *H02M 1/38* $^{(2007.01)}$
*H02M 7/487* $^{(2007.01)}$

(52) Cooperative Patent Classification (CPC):
**H02M 1/12; H02M 1/38; H02M 7/487;** H02M 1/0054;
Y02B 70/10

(54) **COMPENSATION OF VOLTAGE DROPS IN A CONVERTER SYSTEM**

KOMPENSATION VON SPANNUNGSABFÄLLEN IN EINEM WANDLERSYSTEM

COMPENSATION DE CHUTES DE TENSION DANS UN SYSTÈME DE CONVERTISSEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**22.12.2021 Bulletin 2021/51**

(73) Proprietor: **ABB Schweiz AG**
**5400 Baden (CH)**

(72) Inventor: **BOILLAT, David**
**5246 Scherz (CH)**

(74) Representative: **Sykora & König Patentanwälte
PartG mbB
Maximilianstraße 2
80539 München (DE)**

(56) References cited:
**US-A1- 2019 229 664**

- **MORA ANDRES ET AL: "Dead-Time and
Semiconductor Voltage Drop Compensation for
Cascaded H-Bridge Converters", IEEE
TRANSACTIONS ON INDUSTRIAL
ELECTRONICS, IEEE SERVICE CENTER,
PISCATAWAY, NJ, USA, vol. 63, no. 12, 1
December 2016 (2016-12-01), pages 7833 - 7842,
XP011633539, ISSN: 0278-0046, [retrieved on
20161108], DOI: 10.1109/TIE.2016.2563378**

**Description**

FIELD OF THE INVENTION

The invention relates to the control of power semiconductor circuits. In particular, the invention relates to a method for controlling a converter circuit and a converter system comprising such a converter circuit.

BACKGROUND OF THE INVENTION

An electrical converter may comprise a half-bridge circuit with multiple half-bridges, each of which providing a phase voltage to a multiphase output voltage of the electrical converter. Generally, an electrical converter should provide a sinusoidal output voltage and/or output current with a desired fundamental frequency and a desired fundamental amplitude. For this purpose, a control device or superordinate controller may provide a reference voltage, which itself may depend on a reference current, in dependence of the output voltage and/or output current. From the reference voltage, switching commands, i.e. turn-on and turn-off commands, for switching power semiconductor switches of the half-bridges into a certain switching state may be generated. To apply the switching commands to the power semiconductor switches, the switching commands may be converted by a gate driver into control voltages and/or control currents adapted to the power semiconductor switches.

In certain half-bridge circuits, e.g. three-level active-neutral-point-clamped (ANPC) half-bridges, different transitions between switching states in an input signal may cause different delays between the reception of the input signal by the control device and the generation of a corresponding output voltage by the half-bridge circuit. As a result, the shape of the output voltage may differ from the shape determined by the control device or may not be delayed by a constant value. That is, an edge or transition in the output voltage may occur later, typically, or earlier than determined by the control device, which reduces or increases the voltage-time area of the output voltage over a clock (e.g. carrier) period. Additionally, the applied potential at the output of the half-bridge circuit may differ from the potential expected by the control device due to voltage drops across the half-bridge circuit.

As a result of this, the fundamental amplitude of the output voltage may not correspond to the one requested by the control device. Accordingly, the fundamental amplitude of the output current may be too low, typically, or too high. Furthermore, such (non-constant) delays and/or such differences in potential may generate an undesired harmonic distortion or undesired additional harmonics in the frequency spectrum of the output voltage or may increase the amplitude of individual harmonics in the frequency spectrum of the output voltage. The undesired distortions, additional harmonics or increased amplitudes of individual harmonics in the frequency spectrum of the output voltage may then also be translated to the output current.

US 2019/0229664 A1 describes a control apparatus for an alternating-current rotary electric machine. The control apparatus comprises a magnetic flux variation estimator with a dead time corrector and a voltage drop corrector.

A method for dead-time and voltage drop compensation in a cascaded H-bridge converter is described in the following article: Andrés Mora et al.: "Dead-Time and Semiconductor Voltage Drop Compensation for Cascaded H-Bridge Converters", IEEE Transactions on Industrial Electronics, vol. 63, no. 12, December 2016.

DESCRIPTION OF THE INVENTION

The invention refers to a method for controlling a converter circuit according to claim 1, and a converter system according to claim 7. Preferred embodiments are defined in the dependent claims.

It is an objective of the invention to provide a method for controlling power semiconductor switches of a converter circuit in a way that losses or addition of voltage-time areas due to voltage drops of power semiconductor devices of the converter circuit are compensated.

This objective is achieved by the subject-matter of the independent claims. Further exemplary embodiments are evident from the dependent claims and the following description.

A first aspect of the invention relates to a method for controlling a converter circuit. The method may be performed automatically by a controller of the converter circuit. The converter circuit may comprise multiple power semiconductor devices, such as power semiconductor switches or diodes. A power semiconductor switch may be a switch adapted for switching voltages greater than 100 V and/or currents greater than 10 A. Such a power semiconductor switch may be a transistor, for example an IGBT or a MOSFET, or a thyristor. A diode may be, for example, a freewheeling diode connected antiparallel to a power semiconductor switch. The converter circuit may be part of a converter system comprising a superordinate controller for providing a reference voltage, a subordinate controller for providing switching commands for the power semiconductor switches from the reference voltage and a gate driver board for applying the switching commands to the power semiconductor switches. Additionally, the converter system may comprise a further component supplied by the converter circuit or from which the converter circuit is supplied, such as an electrical machine, a fan or an electrical grid. In particular, the converter circuit may be a half-bridge circuit with one or more half-bridges, each of which comprising one or more of said power semiconductor devices. In traction applications, the superordinate controller may be adapted for determining the reference voltage in dependence of a desired torque, speed and/or stator or rotor flux of an electric machine. The superordinate controller may, for example, comprise flux observers for sensorless speed control of the electric machine.

According to an embodiment of the invention, the method comprises: receiving an input signal indicating transitions between switching states of the converter circuit, each of the transitions having a switching time. The transitions may cause an output voltage and/or output current of the converter circuit to follow the reference voltage and/or the reference current. The transitions may correspond to a change of a voltage level that the converter circuit is able to generate. For example, the converter circuit may be adapted for generating two, three or more than three different voltage levels. A switching time may indicate a point in time at which the output voltage should be set to the corresponding (desired) voltage level. For example, the input signal may be a pulse-width modulated signal generated from the reference voltage.

According to an embodiment of the invention, the method further comprises: generating a modified signal from the input signal. Generally, the modified signal may be a signal having a certain delay with respect to the input signal. This delay may be adjusted by moving each of the transitions in the input signal by a certain time value. Thus, this time value, e.g. a delay time and/or an offset time, is added to the corresponding switching time. The time value may be chosen in dependence of characteristics and (measured) states such as currents, voltages and/or temperatures of the converter circuit. Pulses in the modified signal may have a width that is equal to or differs from a width of corresponding pulses in the input signal. The modified signal may be, for example, an output signal of the controller of the converter circuit. Alternatively, the modified signal may be an internal signal of the controller of the converter circuit. In this case, the controller may use the modified signal to generate switching commands for the power semiconductor switches of the converter circuit as output signals.

The delay time and/or the offset time may also take the value of zero.

According to an embodiment of the invention, the method further comprises: generating switching signals for power semiconductor switches of the converter circuit from the modified signal. The switching signals may be generated by a gate driver from switching commands indicating individual on-states and off-states of the power semiconductor switches according to a switching state as indicated by the input signal. The switching commands may be included in the modified signal or may be generated from the modified signal by converting a switching state in the modified signal into a combination and/or concatenation of on-states and off-states of the power semiconductor switches. The switching commands may then be converted into corresponding gate voltages and/or gate currents by the gate driver.

According to an embodiment of the invention, the method further comprises: applying the switching signals to the power semiconductor switches such that an output voltage is generated.

According to an embodiment of the invention, the method further comprises: generating a modified signal by additionally delaying each of the transitions in the input signal by a delay time, wherein the delay time is added to the switching time of the transition. The delay time may be a positive time value. In other words, the delay time may be determined such that, by adding the delay time to the switching time, a resulting delay between a transition in the input signal and a correlated transition in the modified signal is increased.

According to an embodiment of the invention, the delay time is determined from measurement data of at least one state variable of the converter circuit and from characteristic data encoding a switching behavior over time of the power semiconductor switches in dependence of the at least one state variable.

Furthermore, the delay time is determined such that differences between delays of edges in the output voltage with respect to corresponding transitions in the input signal are reduced, ideally equalized.

Generally, the characteristic data may comprise at least one static and/or dynamic characteristic related to one or more power semiconductor switches and/or power semiconductor devices of the converter circuit. A dynamic characteristic may comprise, for example, a turn-on delay time, turn-off delay time, rise time or fall time of a power semiconductor switch, a timing value describing the turn-on or turn-off process of a power semiconductor switch or a combination of at least two of said examples. A static characteristic may comprise, for example, a forward voltage drop or an on-state voltage drop of a power semiconductor device. A forward voltage drop may be an anode-cathode voltage of a diode, for example a freewheeling diode of an IGBT, when a certain forward current flows through the diode. An on-state voltage may be a collector-emitter voltage of an IGBT when a sufficient positive gate-emitter voltage is applied and a certain collector current is driven.

The characteristic data may be provided for each of the power semiconductor switches and/or power semiconductor devices separately, for a group of power semiconductor switches and/or power semiconductor devices, such as a half-bridge, or for all of them considered as a whole. For example, the characteristic data may be provided by a manufacturer of the power semiconductor switches and/or power semiconductor devices. Alternatively, the characteristic data may be extracted based on self-conducted measurements realized with a sample of the power semiconductor switches and/or power semiconductor devices.

A state variable may be, for example, at least one of an input voltage, an input current, an output voltage, an output current and a temperature. In the case where IGBTs are used as power semiconductor switches, a state variable may be, for example, a blocking voltage, a DC-link voltage, a collector current, a half-bridge output current, a junction temperature of the IGBTs or a baseplate temperature of a cooling system. The measurement data may be obtained by processing, e.g. filtering and/or digitizing, a voltage, current and/or temperature measurement signal of the converter circuit.

It may be that different transitions in the input signal are delayed by different delay times.

With this embodiment, the effect of time delays at turn-on and turn-off of the power semiconductor switches can be compensated. This improves the switching precision and hence reduces deviations between the fundamental component in the output voltage and the desired reference voltage, reduces the distortions in the output voltage of the converter circuit and/or ensures stable operation of the electrical converter.

According to an embodiment of the invention, the method further comprises: generating a modified signal by moving each of the transitions by an offset time, wherein the offset time is added to the switching time of the transition. The offset time may be a positive or negative time value. In other words a delay between a transition in the input signal and a correlated transition in the modified signal may be increased or decreased. A minimum delay time may be required in order to be causal. This minimum delay time may be determined from certain constraints, such as a given clock frequency of the controller of the converter circuit, an interlocking delay, forward and on-state voltage drops, maximum operating conditions, etc. In other words, the minimum delay time may be determined such that, even if a negative offset time is used, a resulting delay between a transition in the input signal and a correlated transition in the modified signal is equal to or greater than zero.

According to an embodiment of the invention, the offset time is determined from measurement data of at least one state variable of the converter circuit and from characteristic data encoding a voltage drop of power semiconductor devices of the converter circuit in dependence of the at least one state variable.

Furthermore, the offset time is determined such that a time integral of a difference between the output voltage generated by the converter circuit and an ideal output voltage is reduced, ideally to zero, wherein the ideal output voltage is based on the input signal and/or modified signal assuming the power semiconductor devices to be ideal. An ideal power semiconductor device may be a power semiconductor device without switching, conduction and/or gate-driving losses. It may be that different transitions in the input signal are delayed by different offset times. For example, the time integral may be determined continually during operation of the converter circuit.

With this embodiment, the effect of on-state voltage drops and/or diode forward voltage drops can be compensated. This reduces (ideally completely) the voltage error in the generation of the output voltage and hence reduces deviations between the fundamental component in the output voltage and the desired reference voltage, reduces the distortions in the output voltage of the converter circuit and/or ensures stable operation of the electrical converter

According to an embodiment of the invention, the method further comprises: determining an estimated output voltage of the converter circuit from the modified signal, from measurement data of at least one state variable of the converter circuit and from characteristic data encoding a switching and/or timing behavior of power semiconductor devices of the converter circuit in dependence of the at least one state variable. For example, the estimated output voltage may be determined with respect to delay times and/or offset times used previously to generate the modified signal.

With this embodiment, the output voltage of the converter circuit, e.g. a half-bridge output voltage, can be determined in an accurate and efficient way. This improves the accuracy with which the superordinate controller operates and hence ensures stable operation of the electrical converter.

According to an embodiment of the invention, the characteristic data is stored in a gate driver board of a power electronics module, which accommodates the power semiconductor devices. The gate driver board may be adapted for generating and/or applying switching signals for power semiconductor switches of the converter circuit from the modified signal. For example, the characteristic data may be stored in the form of a lookup table and/or in the form of one or more functions. In particular, the characteristic data may be stored in a non-volatile memory of the gate driver board.

As mentioned above, the converter circuit may be adapted for providing two or more phase voltages as output voltages. Each of these phase voltages may be provided by a separate power electronics module.

Further aspects of the invention relate to a computer program comprising instructions which, when the computer program is executed by a computer, cause the computer to carry out the method as described above and below and to a computer-readable medium having stored thereon such a computer program. The method may be implemented in software and may be run on a controller having a processor and a memory in which the computer program is stored.

A computer-readable medium may be a floppy disk, a hard disk, a USB (Universal Serial Bus) storage device, a RAM (Random Access Memory), a ROM (Read Only Memory), an EPROM (Erasable Programmable Read Only Memory) or a FLASH memory. A computer-readable medium may also be a data communication network, e.g. the Internet, which allows downloading a program code. In general, the computer-readable medium may be a non-volatile or volatile memory.

A further aspect of the invention relates to a converter system adapted for carrying out the method as described above and below. It has to be noted that the method also may be at least partially implemented in hardware, for example in a DSP (Digital Signal Processor) and/or FPGA (Field Programmable Gate Array).

It has to be understood that features of the method as described above and below may be features of the converter system, the computer program and the computer-readable medium as described above and below, and vice versa.

These and other aspects of the invention will be apparent from and elucidated with reference to the embodiments described hereinafter.

According to an embodiment of the invention, the delay time is determined such that the delays of the edges in the output voltage are at least approximately equal. For example, the delay time may be determined such that the delays deviate from each other by a maximum of 50 percent or less. Such delays may also be called quasi-constant delays.

According to an embodiment of the invention, a process delay is estimated for each of the transitions from the switching states defining the transition, the measurement data and the characteristic data. The delay time is determined by subtracting the process delay from a reference delay. A reference delay may be a predefined delay chosen in dependence of given constraints with respect to the controller and/or the power semiconductor switches of the converter circuit, such as mentioned above. For example, the reference delay may be chosen such that any possible process delay is equal to or shorter than the reference delay. In this way, the impact of varying process delays on the delay between a transition in the input signal and a resulting edge in the output voltage can be reduced significantly or, ideally, eliminated.

According to an embodiment of the invention, the reference delay is a constant delay. In other words, the reference delay may be a fixed time value.

According to an embodiment of the invention, the delay time is determined offline and stored in a lookup table. For example, the lookup table may be stored in a non-volatile memory of the controller of the converter circuit.

According to an embodiment of the invention, the characteristic data is stored in a gate driver board adapted for generating and applying the switching signals. Alternatively or additionally, a lookup table for the delay time may be stored in the gate driver board. In particular, the characteristic data and/or the lookup table may be stored in a non-volatile memory of the gate driver board. In this way, the characteristic data and/or the lookup table can be read directly from the gate driver board, which simplifies the installation process and reduces errors.

According to an embodiment of the invention, the characteristic data comprises one or more dynamic (switching) characteristics for turn-on of at least one of the power semiconductor switches. Alternatively or additionally, the characteristic data comprises one or more dynamic (switching) characteristics for turn-off of at least one of the power semiconductor switches. As mentioned above, such a dynamic characteristic may comprise, for example, a turn-on delay time, turn-off delay time, rise time or fall time of a power semiconductor switch, a timing value describing the turn-on or turn-off process of a power semiconductor switch or a combination of at least two of said examples.

According to an embodiment of the invention, the state variable is at least one of an output current, a DC-link voltage, a partial DC-link voltage, i.e. a voltage between one of the poles and a neutral point of the DC-link, and a temperature of the converter circuit.

According to an embodiment of the invention, the input signal is generated by means of at least one of pulse-width modulation (PWM), space vector modulation (SVM), optimized pulse pattern modulation (OPP) or fundamental switching modulation. As mentioned above, the input signal may be generated by pulse-width modulating a reference voltage provided by a superordinate controller of the converter circuit.

According to an embodiment of the invention, the input signal is generated from a reference voltage and/or reference current. The reference voltage and/or reference current is determined in dependence of a measured output voltage and/or measured output current of the converter circuit. Additionally, the reference voltage and/or reference current may be adjusted based on an estimated output voltage of the converter circuit, which may be determined from the modified signal considering the measurement data and/or the characteristic data.

According to an embodiment of the invention, the characteristic data comprises a forward voltage drop of a diode of the converter circuit in dependence of at least one state variable. Such diode may be a freewheeling diode or any other diode assembled into the converter circuit.

According to an embodiment of the invention, the ideal output voltage is determined for each of the transitions in the input signal and or modified signal. The ideal output voltage may be determined from the switching states of the transition. The offset time for a current transition is determined such that the time difference between the point in time of the current transition and the point in time of a previous transition multiplied by the difference of the output voltage generated from the switching signals and the ideal output voltage is equal to the offset time multiplied by an absolute value of a difference between the ideal output voltage after and before the current transition. By moving the current transition by the offset time, the difference between the voltage-time area of the output voltage generated from the switching signals and the voltage-time area of the ideal output voltage can be reduced to a minimum in a very efficient and accurate way. Thus, the output voltage reproduces (in average) correctly the reference voltage (neglecting the delays at turn-off and turn-on of the power semiconductors). Alternatively speaking, moving the current transition by the offset time allows compensation of the impact of voltage drops on the output voltage.

For example, the offset time may be determined offline and stored in a lookup table. The lookup table for the offset time may be stored in a gate driver board of the converter circuit, e.g. in a non-volatile memory of the gate driver board.

It is possible that the offset time is determined with respect to the delay time and vice versa.

According to an embodiment of the invention, the estimated output voltage is determined such that voltage-time areas of the estimated output voltage and the output voltage over a clock period are approximately equal. The estimated output voltage may be determined such that edges in the estimated output voltage have a delay, which approximately corresponds to a constant delay plus/minus an offset time, with respect to edges in the output voltage generated from the switching signals. The estimated output voltage may be therein regarded as ideal. In this way, it is guaranteed that the voltage-time areas over a clock period (e.g. carrier period) of the estimated output voltage and of the output voltage are approximately equal. Therefore, for an offset time close to zero, pulses in the output voltage generated from the switching signals and correlated pulses in the estimated output voltage may have approximately the same width.

According to an embodiment of the invention, the characteristic data encodes a switching behavior and/or a timing behavior of power semiconductor switches of the converter circuit in dependence of at least one state variable. Such behavior may be a static and/or dynamic behavior.

According to an embodiment of the invention, the characteristic data comprises a dynamic characteristic for turn-on and/or turn-off of such a power semiconductor switch (such as described above).

According to an embodiment of the invention, the characteristic data encodes a voltage drop of power semiconductor devices of the converter circuits in dependence of at least one state variable.

According to an embodiment of the invention, the characteristic data comprises a voltage drop of a power semiconductor switch of the converter circuit in dependence of the at least one state variable. Such voltage drop of a power semiconductor switch may be an on-state-voltage drop of the power semiconductor switch, for example a collector-emitter voltage drop of an IGBT.

According to an embodiment of the invention, the characteristic data comprises a voltage drop of a diode of the converter circuit in dependence of the at least one state variable.

According to an embodiment of the invention, the estimated output voltage is provided to a superordinate controller. A reference voltage is provided by the superordinate controller in dependence of the estimated output voltage.

According to an embodiment of the invention, the converter system comprises a converter circuit, a controller with a signal modification device adapted for generating the modified signal from the input signal and a gate driver board adapted for generating switching signals for power semiconductor switches of the converter circuit from the modified signal. The gate driver board may also be adapted for applying the switching signals to the power semiconductor switches such that an output voltage is generated.

According to an embodiment of the invention, the converter system further comprises a voltage estimator adapted for determining the estimated output voltage of the converter circuit as described above and below.

According to an embodiment of the invention, the converter system comprises an FPGA in which at least one of the signal modification device and the voltage estimator is implemented.

According to an embodiment of the invention, the gate driver board comprises a non-volatile memory in which the characteristic data is stored. The gate driver board and the controller are interconnected for data communication such that the controller can read the characteristic data from the non-volatile memory. For example, the controller may read the characteristic data once during a start-up phase of the converter system and load it into a volatile memory and/or non-volatile memory.

According to an embodiment of the invention, the converter circuit comprises a half-bridge circuit adapted for converting an input voltage into an output voltage with multiple voltage levels. Each of the voltage levels is encoded as a switching state in the input signal. For example, the output voltage may have two voltage levels, e.g. a positive level and a negative level, or at least three voltage levels, e.g. at least one positive level, at least one negative level and at least one neutral level.

According to an embodiment of the invention, the half-bridge circuit is at least one of a two-level half-bridge circuit, a three-level neutral-point-clamped half-bridge circuit and a three-level active-neutral-point-clamped half-bridge circuit.

According to an embodiment of the invention, the power semiconductor devices of the converter circuit comprise the power semiconductor switches. In other words, the power semiconductor switches may be assembled into the power semiconductor devices. Each power semiconductor device may comprise one or more power semiconductor switches.

According to an embodiment of the invention, the power semiconductor devices comprise freewheeling diodes connected antiparallel to the power semiconductor switches. In other words, the freewheeling diodes may be assembled into the power semiconductor devices. Each power semiconductor device may comprise one or more freewheeling diodes. For example, each power semiconductor device may comprise one power semiconductor switch and one freewheeling diode connected antiparallel to the power semiconductor switch.

According to an embodiment of the invention, the gate driver board and the converter circuit are part of a power electronics module of the converter system. The characteristic data is adapted to power semiconductor devices assembled into the converter circuit. For example, the power electronics module may comprise a half-bridge as the converter circuit.

BRIEF DESCRIPTION OF THE DRAWINGS

The subject matter of the invention will be explained in more detail in the following text with reference to exemplary embodiments which are illustrated in the attached drawings.

Fig. 1 schematically shows a converter system according to an embodiment of the invention.

Fig. 2 shows a timing diagram with an input signal and a resulting output voltage, which are generated in a method according to an embodiment of the invention.

Fig. 3 schematically shows a converter system according to a further embodiment of the invention.

Fig. 4 shows a diagram with an ideal output voltage and an actual output voltage, which are generated in a method according to a further embodiment of the invention.

Fig. 5 shows a timing diagram with an input signal, a modified signal, a resulting output voltage and an estimated output voltage, which are generated in a method according to a further embodiment of the invention.

Fig. 6 schematically shows a converter system according to a further embodiment of the invention.

Fig. 7 shows a flow diagram illustrating a method according to embodiments of the invention.

In principle, identical parts are provided with the same reference symbols in the figures.

DETAILED DESCRIPTION OF EXEMPLARY EMBODIMENTS

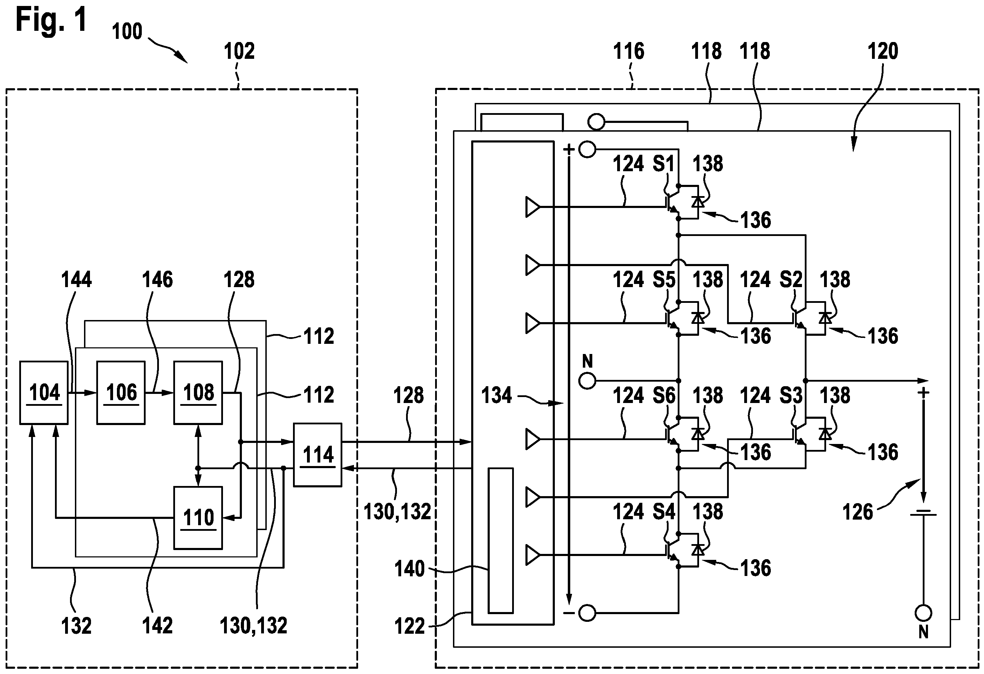

Fig. 1 schematically shows a converter system 100 comprising a controller 102 with a control device 104, a modulation device 106, a signal modification device 108 and a voltage estimator 110. The components 106, 108 and 110 may be implemented as software modules and/or hardware modules of a unit 112 such as, for example, an FPGA. The controller 102 may also comprise a gate driver interface 114.

Furthermore, the converter system 100 comprises a converter circuit 116 with multiple power electronics modules 118 in the form of half-bridge modules 118, which also may be called Power Electronics Building Blocks (PEBBs). Each of the half-bridge modules 118 comprises a half-bridge 120 and a gate driver board 122 adapted for generating switching signals 124 for power semiconductor switches S1 to S6 of the half-bridge 120 and for applying them to the power semiconductor switches S1 to S6. The switching signals 124 may be gate voltages, for example. The controller 102 may comprise a unit 112 for each of the half-bridge modules 118. The half-bridges 120 are adapted for generating an output voltage 126 with multiple voltage levels. In particular, the voltage levels may comprise one or more positive voltage levels, one or more negative voltage levels and/or a neutral voltage level.

The gate driver interface 114 receives a modified signal 128 for the power semiconductor switches S1 to S6 from the signal modification device 108 of the units 112 and transmits the modified signals 128 to the corresponding gate driver boards 122, which generate the switching signals 124 from the modified signals 128. Inversely, the gate driver interface 114 receives characteristic data 130 and measurement data 132 from the gate driver boards 122 (or from other parts of the half-bridge module 118) and transmits them to the signal modification device 108 as well as to the voltage estimator 110 of the units 112 and/or to the control device 104. Alternatively, the characteristic data 130 may be transmitted via the control device 104 to the signal modification device 108 as well as to the voltage estimator 110. For example, the characteristic data 130 may be transmitted to the signal modification device 108 and the voltage estimator 110 during a start-up phase of the converter system 100. Alternatively, the characteristic data 130 may be transferred via the control device 104 to the signal modification device 108 and the voltage estimator 110 during the start-up phase.

The characteristic data 130 defines a characteristic timing and/or switching behavior of the power semiconductor switches S1 to S6 in dependence of one or more state variables, such as, for example, an output current, a DC-link voltage 134, which may also be a partial DC-link voltage (such as described above), and/or a temperature of the half-bridge 120, e.g. a junction temperature. For example, the characteristic data 130 may define a delay time for turn-on, a delay time for turn-off and a voltage drop of the half-bridge 120.

The measurement data 132 may comprise measurement values for the one or more state variables. For example, the gate driver board 122 (or another part of the half-bridge module 118) may receive measurement signals with respect to the output current, the DC-link voltage 134, which may also be a partial DC-link voltage (such as described above), and/or the temperature of the half-bridge 120 and may filter and/or transform these measurement signals in order to generate the measurement data 132.

The power semiconductor switches S1 to S6 may be part of power semiconductor devices 136, which may be assembled into the converter circuit 116, i.e. into the half-bridge modules 118. Each of the power semiconductor devices 136 may comprise one of the power semiconductor switches S1 to S6 and, additionally, a freewheeling diode 138 connected antiparallel to the respective power semiconductor switch. Accordingly, the characteristic data 130 may comprise a voltage drop of the power semiconductor switches S1 to S6 and the freewheeling diodes 138 in dependence of the one or more state variables.

The half-bridges 120 may be composed of MOSFETs and/or IGBTs as power semiconductor switches. In the case of IGBTs, the half-bridges 120 may also comprise the freewheeling diodes 138.

The gate driver boards 122 may comprise a non-volatile memory 140 having stored thereon the characteristic data 130 adapted to the power semiconductor devices 136 of the respective half-bridge module 118, i.e. to the power semiconductor switches S1 to S6 and the freewheeling diodes 138.

The controller 102 and the gate driver boards 122 communicate with each other via the gate driver interface 114. The controller 102, at least temporarily, e.g. during the start-up phase of the converter system 100, may have reading access to the memories 140 of the gate driver boards 122 for reading the respective characteristic data 130.

From the characteristic data 130 and the measurement data 132 received from the gate driver interface 114, the voltage estimator 110 determines an estimated output voltage 142 of the half-bridge 120, as described in more detail below.

Based on the estimated output voltage 142 of the half-bridge 120 and on further references, such as, for example, a reference speed or reference torque for an electric machine supplied by the converter system 100, the control device 104 generates a reference voltage 144 for the half-bridge 120 and feeds it to the modulation device 106. The reference voltage 144 is also generated based on the measurement data 132, which in this case may comprise a measured output current of the half-bridge 120, a measured voltage of the converter circuit 116 and/or a measured rotational speed of the electric machine connected to the converter circuit 116. The modulation device 106 converts the reference voltage 144 into an input signal 146 indicating transitions between switching states of the half-bridge 120. Each of the switching states encodes one of the multiple voltage levels of the half-bridge 120. The input signal 146 may also encode switching times at which the transitions occur, i.e., at which the half-bridge 120 should be switched from one switching state into another, such that the corresponding voltage level is generated at the output of the half-bridge 120. The transitions may be encoded as changes of the input signal 146 over time, wherein the switching times may correspond to instants at which the changes of the output voltage 126 occur. The input signal 146 may, for example, be a modulator command generated by pulse-width modulating the reference voltage 144.

The signal modification device 108 receives the input signal 146 and generates the modified signal 128 by delaying the input signal 146 using the characteristic data 130 and the measurement data 132 received from the gate driver board 122 directly and/or via the gate driver interface 114. More precisely, in order to generate the modified signal 128, the transitions in the input signal 146 may be additionally delayed and/or moved by certain amounts of time determined from the characteristic date 130 and the measurement data 132.

On the one hand, the signal modification device 108 determines a delay time from the data 130, 132 for each of the transitions. The signal modification device 108 adds the delay time to the switching time of the respective transition, which leads to a new switching time. The signal modification device 108 then outputs the modified signal 128 comprising the new switching time. Similarly to the input signal 146, the transitions delayed by the delay time may be encoded as changes of the modified signal 128 over time, wherein the new switching times may correspond to instants at which the changes of the adjusted output voltage 126 occur. Generally, the delay times are determined such that the delays between the transitions in the input signal 146 and resulting edges in the output voltage 126 of the half-bridge 120 are equalized.

To reduce differences between these delays, the signal modification device 108 may, for example, estimate a process delay for each transition in the input signal 146 from the characteristic data 130 in conjunction with the actual measurement data 132. The process delay describes how long it would take to convert a transition in the input signal 146 into a corresponding voltage level at the output of the half-bridge 120. The process delay may not only depend on an actual timing and/or switching behavior of the half-bridge 120 but also on the voltage level to be output by the half-bridge 120 and/or on the junction temperature of the power semiconductor devices 136 and/or the diodes 138. To determine the delay time, the signal modification device 108 may subtract the estimated process delay from a predefined reference delay, which may be a fixed time value defined with respect to given software and/or hardware constraints, e.g. an interlocking delay for the power semiconductor switches S1 to S6 or an update rate of the controller 102. That is, for each of the transitions to be delayed the same reference delay may be used to determine the delay time.

To compensate for voltage drops of the power semiconductor devices 136, the signal modification device 108 additionally or alternatively determines an offset time for each of the transitions in the input signal 146 from the data 130, 132. The offset time may be negative, positive or zero. Similarly to the delay time, the offset time is added to the switching time of the respective transition to generate the output voltage 126. Unlike the delay time, the offset time may also be a negative time value, which has the effect that the delays between the transitions in the input signal 146 and the resulting edges in the output voltage 126 of the half-bridge 120 may not only be prolonged but also be shortened.

To determine the offset time, the signal modification device 108 calculates a time integral of a difference between an ideal output voltage and the output voltage 126 of the half-bridge 120. The ideal output voltage is calculated from the input signal 146 and/or modified signal 128 using parameters that define an ideal state of the power semiconductor devices 136, in which no conduction or switching losses occur. The offset time is determined such that the time integral is reduced, as described in more detail below.

The delay times for different transitions may differ from each other. Furthermore, the delay times may be determined independently of each other. It is possible that some of the transitions are not additionally delayed. In these cases, the delay time may be set to zero.

Analogously, the offset times for different transitions may differ from each other and/or may be determined independently of each other. If a transition should not additionally be moved, the offset time for this transition may be set to zero.

The delay time and/or offset time may be determined online or offline. In the latter, delay times and/or offset times may be stored in a lookup table, wherein each delay time and/or offset time has a certain set of measurement data 132 or certain ranges of measurement data 132 assigned to it. The lookup table(s) may be stored in the memory 140. The lookup table(s) may, for example, be loaded into a memory of the controller 102 during the start-up phase of the converter system 100.

In general, the half-bridges 120 may have a n-level topology, i.e. 2-level, 3-level, etc., wherein $n \in \mathbb{N}$ is equal to the number of voltage levels the half-bridge 120 is able to produce.

Fig. 1 shows a 3-level ANPC half-bridge 120 as an example. Such a half-bridge 120 may comprise two series-connected upper power semiconductor switches S1, S5 which are interconnected via a neutral point with two series-connected lower power semiconductor switches S4, S6. Two further series-connected power semiconductor switches S2, S3 connect a midpoint between the upper power semiconductor switches S1, S5 with a midpoint between the lower power semiconductor switches S4, S6. The output voltage 126 of the half-bridge 120 is provided at a midpoint between the two further power semiconductor switches S2, S3.

Further examples for possible topologies for the half-bridge 120 are n-level neutral-point-clamped (NPC), flying capacitor, T-type or modular multilevel (MM) topologies.

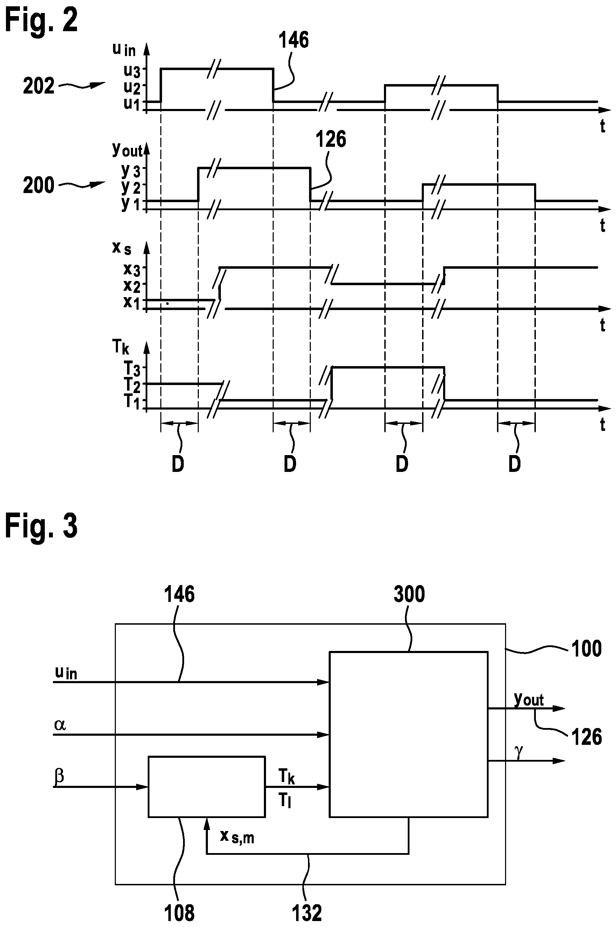

Fig. 2 exemplarily shows the functional principle of a delay compensation logic using the signal modification device 108 for three discrete values of the input signal $u_{in}$, 146. Each transition 200 in the output voltage $y_{out}$, 126 has a certain delay $D = T_d(x_s, \zeta(u_{in})) + T_k$ with respect to a transition 202 in the input signal $u_{in}$, 146, wherein $T_d$ is an inherent process delay and $T_k$ is the adjustable delay time. The delay time $T_k$ varies between three discrete values, each of which corresponding to a discrete value of the state variable $x_s$. The delay time $T_k$ is determined such that the delays $D$ are quasi-constant, i.e. deviate little from each other, e.g. by a maximum of 50 percent. The process delays $T_d$ exemplarily have the following order: $T_d(x_1, u_1 \rightarrow u_3)$, $T_d(x_3, u_3 \rightarrow u_1)$, $T_d(x_2, u_1 \rightarrow u_2)$, $T_d(x_3, u_2 \rightarrow u_1)$.

Fig. 3 shows an embodiment of the converter system 100. A signal modification device 108 may be added to an existing subsystem 300, which may comprise a switching logic and a half-bridge 120. The signal modification device 108 and the subsystem 300 may form a system 100. The signal modification device 108 may comprise a single block, which may be positioned upstream to the system 100, as shown in fig. 3, or multiple blocks, which, at least partially, may also be positioned downstream to the system 100. The terms upstream and downstream refer to the signal flow.

The subsystem 300 may receive the input signal $u_{in}$, 146 and at least one of the delay time $T_k$ and the offset time $T_l$ and generates the output voltage $y_{out}$, 126 using the input signal $u_{in}$, 146 and at least one of the delay time $T_k$ and the offset time $T_l$. An additional input $\alpha$ may be used for generating the output voltage $y_{out}$, 126 and an additional output $\gamma$ may be generated. The additional input $\alpha$ may comprise timing variables or parameters such as, for example, an interlock delay and/or an enabling signal. The additional output $\gamma$ may, for example, comprise current switching states of the power semiconductor switches S1 to S6.

The signal modification device 108 may receive the measurement data $x_{s,m}$, 132 from the subsystem 300 and may determine the delay time $T_k$ and/or the offset time $T_l$ from the measurement data $x_{s,m}$, 132 of at least one state variable $x_s$ of the converter circuit 116 and from characteristic data 130 encoding a behavior of the power semiconductor devices 136 of the converter circuit 116 in dependence of the state variable(s) $x_s$, e.g. a switching and/or timing behavior of the power semiconductor switches. The signal modification device 108 may use an additional input $\beta$ to determine the delay time $T_k$ and/or the offset time $T_l$. The additional input $\beta$ may, for example, be a maximum delay or reference delay $T_c$ or an on-signal or off-signal for activating or deactivating a process for providing the delay time $T_k$ and/or the offset time $T_l$.

The signal modification device 108 may find $T_k(x_{s,m}, t) = T_c - T_e$ such that $y_{out}$, 126 has a quasi-constant delay $D$ to $u_{in}$, 146, wherein the reference delay $T_c$ = const., a measured state $x_{s,m} \cong x_s$, an estimated process delay $T_e \cong T_d$ and, with $g$ being an arbitrary function,

$$y_{out} = g\big[u_{in}\big(t - (T_d + T_c - T_e)\big)\big] = g\big[u_{in}(t - T_c)\big].$$

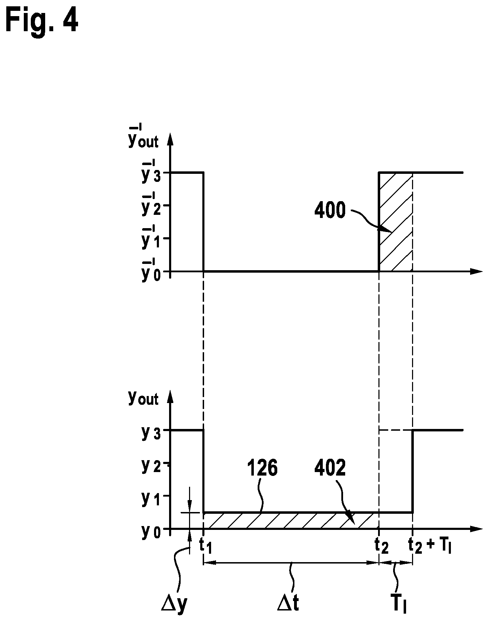

Fig. 4 exemplarily shows the functional principle of a voltage drop compensation logic implemented in the signal modification device 108 with four values for the output voltage $y_{\text{out}}$, 126 and the ideal output voltage $\bar{y}'_{\text{out}}$. The output voltage $y_{\text{out}}$, 126 shows a difference $\Delta y(t)$ to the ideal output voltage $\bar{y}'_{\text{out}}$ in the time interval $[t_1, t_2]$. The delay $D$ in fig. 4 is assumed to be close to zero, e.g. equal to zero.

The ideal output voltage $\bar{y}'_{\text{out}}$ may be determined for each transition 202 in the input signal $u_{\text{in}}$, 146 from the switching states of the transition 202. Complementary or alternatively, the ideal output voltage $\bar{y}'_{\text{out}}$ may be determined for each transition 500 in the modified signal $x_{\text{in}}$, 128 from the switching states of the transition 500.

The offset time $T_l$ for a current transition 202, 500 may be determined such that the difference $\Delta t$ between the point in time $t_2$ of the current transition and the point in time $t_1$ of a previous transition 202, 500 multiplied by the difference $\Delta y(t)$ is equal to the offset time $T_l$ multiplied by an absolute value of a difference between the ideal output voltage $\bar{y}'_{\text{out}}$ after and before the current transition, i.e. by $\left|\bar{y}'_{\text{out}}(t_2{}^+) - \bar{y}'_{\text{out}}(t_2{}^-)\right|$, in fig. 4 $\left|\bar{y}'_3 - \bar{y}'_0\right|$.

In other words, the offset time $T_l$ may be determined such that a first voltage time area 400 below $\bar{y}'_{\text{out}} - \bar{y}'_{\text{out}}(t_2{}^-)$ in the time interval $[t_2, (t_2 + T_l)]$ is equal to a second voltage time area 402 below $y_{\text{out}} - \bar{y}'_{\text{out}}$ $(y_0 = \bar{y}'_0)$ in the time interval $[t_1, t_2]$:

$$\int_{t_1}^{t_2}[y_{\text{out}} - \bar{y}'_{\text{out}}]dt = \int_{t_2}^{t_2+T_l}|\bar{y}'_{\text{out}}(t_2{}^+) - \bar{y}'_{\text{out}}(t_2{}^-)|dt.$$

In short, the additional area product 402 compared to the ideal output voltage $\bar{y}'_{\text{out}}$ is compensated by additionally moving the transition 202, 500 at $t_2$ by $T_l$.

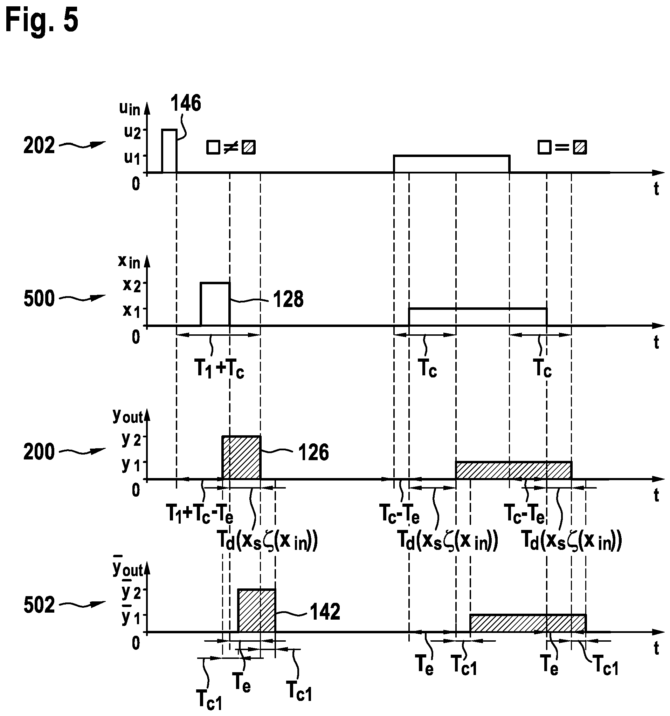

Fig. 5 exemplarily shows the functional principle of an output voltage estimation logic implemented in the voltage estimator 110 from fig. 1 with three discrete values for the input signal $u_{\text{in}}$, 146. Also shown are the modified signal $x_{\text{in}}$, 128, the output voltage $y_{\text{out}}$, 126 and the estimated output voltage $\bar{y}_{\text{out}}$, 142.

Each of the transitions 500 in the modified signal $x_{\text{in}}$, 128 is delayed with respect to a corresponding transition 202 in the input signal $u_{\text{in}}$, 146. As already described above, the transitions 500 in the modified signal $x_{\text{in}}$, 128 are delayed such that the delay $D$ of the resulting transitions 200 in the output voltage $y_{\text{out}}$, 126 is quasi-constant and approximately equal to the reference delay $T_c$ and/or that voltage drops are compensated. However, it is possible that a falling edge of a relatively short pulse in the input signal $u_{\text{in}}$, 146 is delayed by an additional delay time $T_1$, which is added to the delay time $T_k = T_c - T_e$ and increases the delay $D$ accordingly.

Due to constraints, such as, for example, a minimum on-time, the pulses in the modified signal $x_{\text{in}}$, 128 may have a greater width than the corresponding pulses in the input signal $u_{\text{in}}$, 146. It may also be that some pulses in the output voltage $y_{\text{out}}$, 126 have approximately the same width as corresponding pulses in the input signal $u_{\text{in}}$, 146 and that some other pulses in the output voltage $y_{\text{out}}$, 126 do not have approximately the same width as the corresponding pulses in the input signal $u_{\text{in}}$, 146.

As can be seen from fig. 5, the estimated output voltage $y_{\text{out}}$, 142 may be determined such that each of its pulses has, at least approximately, the same width as the corresponding pulses in the output voltage $y_{\text{out}}$, 126 or that each transition 502 in the estimated output voltage $\bar{y}_{\text{out}}$, 142 has an approximately constant delay $T_{c1}$ with respect to a preceding transition 200 in the output voltage $y_{\text{out}}$, 126. The timing diagram shown in fig. 5 assumes an offset time which is close to zero, e.g. equal to zero. In case of an offset time which is not close to zero, the constant delay $T_{c1}$ from above may merge to a delay corresponding to the constant delay $T_{c1}$ plus/minus the offset time $T_l$. Alternatively, the estimated output voltage $\bar{y}_{\text{out}}$, 142 may be determined such that the voltage-time area over a clock period (e.g. carrier period) of the estimated output voltage $y_{\text{out}}$, 142 and of the output voltage $y_{\text{out}}$, 126 are approximately equal.

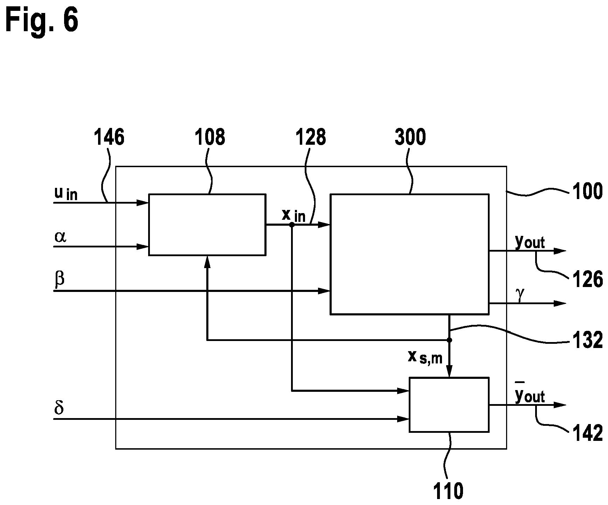

Fig. 6 shows an embodiment of the converter system 100 similar to fig. 3. In fig. 6, both the voltage estimator 110 and the signal modification device 108 may be added to an existing subsystem 300 comprising the half-bridge 120. A switching logic may be implemented in the signal modification device 108. The subsystem 300 may receive the modified signal $x_{\text{in}}$, 128 from the signal modification device 108 and generate the output voltage $y_{\text{out}}$, 126 from the modified signal $x_{\text{in}}$, 128. The subsystem 300 may use the additional input $\beta$ to generate the output voltage $y_{\text{out}}$, 126. The signal modification device 108 may generate the modified signal $x_{\text{in}}$, 128 from the input signal $u_{\text{in}}$, 146, the measurement data $x_{s,m}$, 132 and, optionally, from the additional input $\alpha$. The voltage estimator 110 may receive the measurement data $x_{s,m}$, 132 from the subsystem 300 and the modified signal $x_{\text{in}}$, 128, which may be switching commands, from the signal modification device 108 and determine the estimated output voltage $\bar{y}_{\text{out}}$, 142 from these inputs. The voltage estimator 110 may use an additional input $\delta$ to determine the estimated output voltage $\bar{y}_{\text{out}}$, 142. The additional input $\delta$ may, for example, be an on-signal or off-signal for activating or deactivating a process for determining the estimated output voltage $\bar{y}_{\text{out}}$, 142.

The voltage estimator 110 may find $\bar{y}_{\text{out}}$ such that

$$\bar{y}_{\text{out}} = \bar{g}\big[x_{\text{in}}\big(t - (T_e + T_{c1} \mp T_I)\big)\big] \cong y_{\text{out}}[(t - T_{c1} \pm T_I)],$$

wherein
$T_e \cong T_d(x_s, \zeta(x_{\text{in}}))$, $T_{c1}$ = const. and $\bar{g} \cong g$.

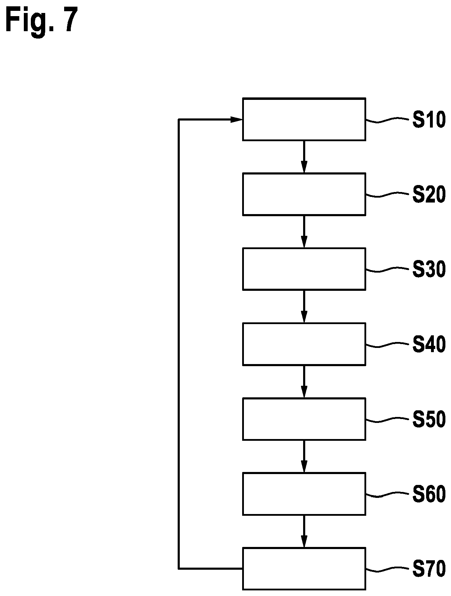

Fig. 7 illustrates a method performed by the converter system 100. The method may be performed automatically by the converter system 100.

In step S10, an input signal $u_{\text{in}}$, 146 indicating transitions 202 between switching states of the converter circuit 116 is received at the signal modification device 108, wherein each of the transitions 202 has a switching time [which incorporates $T_d(x_s, \zeta(u_{\text{in}}))$].

In step S20, the signal modification device 108 generates a modified signal $x_{\text{in}}$, 128 by additionally delaying each of the transitions 202 by a delay time $T_k$, wherein the delay time $T_k$ is added to the switching time of the transition 202. The delay time $T_k$ is determined from measurement data $x_{s,m}$, 132 of at least one state variable $x_s$ of the converter circuit 116 and from characteristic data 130 encoding a switching and/or timing behavior of the power semiconductor switches S1, S2, S3, S4, S5, S6 in dependence of the state variable(s) $x_s$.

Additionally or alternatively, the signal modification device 108 generates a modified signal $x_{\text{in}}$, 128 by additionally moving each of the transitions 202 by an offset time $T_I$, wherein the offset time $T_I$ is added to the switching time of the transition 202. The offset time $T_I$ is determined from measurement data $x_{s,m}$, 132 of at least one state variable $x_s$ of the converter circuit 116 and from characteristic data 130 encoding a voltage drop of the power semiconductor devices 136 of the converter circuit 116 in dependence of the state variable(s) $x_s$.

Additionally or alternatively, the signal modification device 108 generates a modified signal $x_{\text{in}}$, 128 by additionally delaying each of the transitions 202 by a delay time $T_k$ plus an offset time $T_I$, wherein the sum $T_k + T_I$ is added to the switching time of the transition 202. The delay time $T_k$ and the offset time $T_I$ are determined from measurement data $x_{s,m}$, 132 of at least one state variable $x_s$ of the converter circuit 116 and from characteristic data 130 encoding a switching and/or timing behavior of the power semiconductor switches S1, S2, S3, S4, S5, S6 and a voltage drop of the power semiconductor devices 136 of the converter circuit 116, respectively, in dependence of the state variable(s) $x_s$.

In step S30, the voltage estimator 110 determines an estimated output voltage $y_{\text{out}}$, 142 of the converter circuit 116 from the modified signal $x_{\text{in}}$, 128, from measurement data $x_{s,m}$, 132 of at least one state variable $x_s$ of the converter circuit 116 and from characteristic data 130 encoding a switching and/or timing behavior and voltage drops of the power semiconductor devices 136 of the converter circuit 116 in dependence of the state variable(s) $x_s$. The characteristic data 130 is stored in the gate driver board 122 of the power electronics module 118, which accommodates the power semiconductor devices 136, e.g. the power semiconductor switches S1, S2, S3, S4, S5, S6 and/or the diodes 138.

The characteristic data 130 may be stored in the gate driver board 122. The characteristic data 130 may comprise at least one of a delay time for turn-on and a delay time for turn-off of at least one of the power semiconductor switches S1, S2, S3, S4, S5, S6. Additionally or alternatively, the characteristic data 130 may comprise a voltage drop of at least one of the power semiconductor devices 136, the power semiconductor switches S1, S2, S3, S4, S5, S6 and the diodes 138 of the converter circuit 116 in dependence of the state variable $x_s$. The state variable $x_s$ may be the DC-link voltage 134, partial DC-link voltages, an output current and/or a temperature of the half-bridge 120 and/or the converter circuit 116.

In step S40, the gate driver board 122 generates switching signals 124 for the power semiconductor switches S1, S2, S3, S4, S5, S6 of the converter circuit 116 from the modified signal $x_{\text{in}}$, 128.

In step S50, the gate driver board 122 applies the switching signals 124 to the power semiconductor switches S1, S2, S3, S4, S5, S6 such that an output voltage $y_{\text{out}}$, 126 is generated.

In step S20, the delay time $T_k$ is determined such that differences between delays $D$ of edges 200 in the output voltage $y_{\text{out}}$, 126 with respect to corresponding transitions 202 in the input signal $u_{\text{in}}$, 146 are reduced. The delay time $T_k$ may be determined such that the delays $D$ of the edges 200 in the output voltage $y_{\text{out}}$, 126 are at least approximately equal. The delay time $T_k$ may be determined offline and stored in a lookup table. It is possible that an estimated process delay $T_e$ is determined for each of the transitions 202 from the switching states defining the transition 202, the measurement data $x_{s,m}$, 132 and the characteristic data 130. The delay time $T_k$ may be determined by subtracting the process delay $T_e$ from a reference delay $T_c$. The reference delay $T_c$ may be a constant delay.

In step S20, the offset time $T_I$ is determined such that a time integral of a difference $\Delta y$ between the output voltage $y_{\text{out}}$, 126 and an ideal output voltage $\bar{y}'_{\text{out}}$ is reduced, wherein the ideal output voltage $\bar{y}'_{\text{out}}$ is based on the input signal $u_{\text{in}}$, 146 and/or modified signal $x_{\text{in}}$, 128 assuming the power semiconductor devices 136 to be ideal. The ideal output voltage $\bar{y}'_{\text{out}}$ may be determined for each of the transitions 202 in the input signal $u_{\text{in}}$, 146 and/or transitions 500 in the modified signal $x_{\text{in}}$, 128. The offset time $T_I$ for an actual transition 202, 500 may be determined such that the difference $\Delta t$ of the point in time $t_2$ of the actual transition 202, 500 and the point in time $t_1$ of a previous transition 202, 500 multiplied by the

difference $\Delta y$ of the output voltage $y_{\text{out}}$, 126 generated from the switching signals 124 and the ideal output voltage $\bar{y}'_{\text{out}}$ is equal to the offset time $T_I$ multiplied by an absolute value of a difference between the ideal output voltage $\bar{y}'_{\text{out}}$ after and before the current transition, i.e. by $\left|\bar{y}'_{\text{out}}(t_2{}^+) - \bar{y}'_{\text{out}}(t_2{}^-)\right|$.

In step S30, the estimated output voltage $\bar{y}_{\text{out}}$, 142 may be determined such that edges 502 in the estimated output voltage $\bar{y}_{\text{out}}$, 142 have approximately a constant delay $T_{c1}$, more precisely a delay of $T_{c1} \pm T_I$, with respect to edges 200 in the output voltage $y_{\text{out}}$, 126 generated from the switching signals 124.

In step S60, a superordinate controller 104 may generate a reference voltage 144 in dependence of at least one of the estimated output voltage $\bar{y}_{\text{out}}$, 142, a measured output voltage and a measured output current of the converter circuit 116.

In step S70, the modulation device 106 may generate the input signal $u_{\text{in}}$, 146 from the reference voltage 144, e.g. by means of pulse-width, OPP and/or fundamental switching modulation.

LIST OF REFERENCE SYMBOLS

| | |
|---|---|
| 100 | converter system |
| 102 | controller |
| 104 | control device |
| 106 | modulation device |
| 108 | signal modification device |
| 110 | voltage estimator |
| 112 | unit |
| 114 | gate driver interface |
| 116 | converter circuit |
| 118 | power electronics module, half-bridge module |
| 120 | half-bridge |
| 122 | gate driver board |
| 124 | switching signal |
| 126 | output voltage |
| 128 | modified signal |
| 130 | characteristic data |
| 132 | measurement data |
| 134 | DC-link voltage |
| 136 | power semiconductor device |
| 138 | freewheeling diode |
| 140 | non-volatile memory |
| 142 | estimated output voltage |
| 144 | reference voltage |
| 146 | input signal |
| 200 | transition in the output voltage |
| 202 | transition in the input signal |
| 300 | subsystem |
| 400 | first voltage time area |
| 402 | second voltage time area |
| 500 | transition in the modified signal |
| 502 | transition in the estimated output voltage |
| $t_1, t_2$ | point in time of a transition in the input signal and/or modified signal |
| $u_{\text{in}}$ | input signal |
| $x_{\text{in}}$ | modified signal |
| $x_s$ | state variable |
| $x_{s,m}$ | measurement data |
| $y_{\text{out}}$ | output voltage |
| $\bar{y}_{\text{out}}$ | estimated output voltage |
| $\bar{y}'_{\text{out}}$ | ideal output voltage |
| $D$ | delay |

S1 to S6      power semiconductor switch
$T_c$    reference delay
$T_{c1}$    constant delay
$T_d$    process delay
$T_e$    estimated process delay
$T_l$    offset time
$T_k$    delay time
$T_1$    additional delay time
$\alpha$    additional input
$\beta$    additional input
$\gamma$    additional output
$\delta$    additional input
$\Delta t$    difference between switching times
$\Delta y$    difference between output voltage and ideal output voltage

**Claims**

1. A method for controlling a converter circuit (116), the method comprising:

   receiving an input signal ($u_{in}$, 146) indicating transitions (202) between switching states of the converter circuit (116), each of the transitions (202) having a switching time;
   generating a modified signal ($x_{in}$, 128) by additionally moving each of the transitions (202) by an offset time ($T_l$), wherein the offset time ($T_l$) is added to the switching time of the transition (202);
   generating switching signals (124) for power semiconductor switches (S1, S2, S3, S4, S5, S6) of the converter circuit (116) from the modified signal ($x_{in}$, 128); and
   applying the switching signals (124) to the power semiconductor switches (S1, S2, S3, S4, S5, S6) such that an output voltage ($y_{out}$, 126) is generated;
   wherein the offset time ($T_l$) is determined from measurement data ($x_{s,m}$, 132) of at least one state variable ($x_s$) of the converter circuit (116) and from characteristic data (130) encoding a voltage drop of power semiconductor devices (136) of the converter circuit (116) in dependence of the at least one state variable ($x_s$);
   wherein the offset time ($T_l$) is determined such that a time integral of a difference ($\Delta y$) between the output voltage ($y_{out}$, 126) and an ideal output voltage ($\bar{y}'_{out}$) is reduced, wherein the ideal output voltage ($\bar{y}'_{out}$) is based on the input signal ($u_{in}$, 146) and/or the modified signal ($x_{in}$, 128) assuming the power semiconductor devices (136) to be ideal;
   wherein the ideal output voltage ($\bar{y}'_{out}$) is determined for each of the transitions (202) in the input signal ($u_{in}$, 146) and/or for each of the transitions (500) in the modified signal ($x_{in}$, 128);
   **characterised in that**
   the offset time ($T_l$) for a current transition (202, 500) is determined such that the difference ($\Delta t$) of a point in time ($t_2$) of the current transition (202, 500) and a point in time ($t_1$) of a previous transition (202, 500) multiplied by the difference ($\Delta y$) of the output voltage ($y_{out}$, 126) generated from the switching signals (124) and the ideal output voltage ($\bar{y}'_{out}$) is equal to the offset time ($T_l$) multiplied by the absolute value of the difference between the ideal output voltage ($\bar{y}'_{out}$) after and before the current transition (202, 500).

2. The method of claim 1,
   wherein the characteristic data (130) comprises a voltage drop of a power semiconductor switch (S1, S2, S3, S4, S5, S6) of the converter circuit (116) in dependence of the at least one state variable ($x_s$).

3. The method of claim 1 or 2,
   wherein the characteristic data (130) comprises a voltage drop of a diode (138) of the converter circuit (116) in dependence of the at least one state variable ($x_s$).

4. The method of one of the previous claims,
   wherein the at least one state variable ($x_s$) is at least one of an output current, a DC-link voltage (134) and a temperature of the converter circuit (116).

**5.** The method of one of the previous claims,

wherein the characteristic data (130) is stored in a gate driver board (122) adapted for generating the switching signals (124); and/or
wherein a lookup table for the offset time ($T_l$) is stored in a gate driver board (122) adapted for generating and applying the switching signals (124).

**6.** The method of one of the previous claims,
wherein the input signal ($u_{in}$, 146) is generated by means of at least one of pulse-width modulation, fundamental switching and space vector modulation.

**7.** A converter system (100), comprising:

a converter circuit (116);
a controller (102) with a signal modification device (108); and
a gate driver board (122);
wherein the signal modification device (108) is configured to receive an input signal ($u_{in}$, 146) indicating transitions (202) between switching states of the converter circuit (116), each of the transitions (202) having a switching time, and for generating a modified signal ($x_{in}$, 128) by additionally moving each of the transitions (202) by an offset time ($T_l$), wherein the offset time ($T_l$) is added to the switching time of the transition (202);
wherein the gate driver board (122) is configured to generate switching signals (124) for power semiconductor switches (S1, S2, S3, S4, S5, S6) of the converter circuit (116) from the modified signal ($x_{in}$, 128) and for applying the switching signals (124) to the power semiconductor switches (S1, S2, S3, S4, S5, S6) such that an output voltage ($y_{out}$, 126) is generated;
wherein the offset time ($T_l$) is determined from measurement data ($x_{s,m}$, 132) of at least one state variable ($x_s$) of the converter circuit (116) and from characteristic data (130) encoding a voltage drop of power semiconductor devices (136) of the converter circuit (116) in dependence of the at least one state variable ($x_s$);
wherein the offset time ($T_l$) is determined such that a time integral of a difference ($\Delta y$) between the output voltage ($y_{out}$, 126) and an ideal output voltage ($\bar{y}'_{out}$) is reduced, wherein the ideal output voltage ($\bar{y}'_{out}$) is based on the input signal ($u_{in}$, 146) and/or modified signal ($x_{in}$, 128) assuming the power semiconductor devices (136) to be ideal;
**characterised in that**
the ideal output voltage ($\bar{y}'_{out}$) is determined for each of the transitions (202) in the input signal ($u_{in}$, 146) and/or for each of the transitions (500) in the modified signal ($x_{in}$, 128);
wherein the offset time ($T_l$) for a current transition (202, 500) is determined such that the difference ($\Delta t$) of a point in time ($t_2$) of the current transition (202, 500) and a point in time ($t_1$) of a previous transition (202, 500) multiplied by the difference ($\Delta y$) of the output voltage ($y_{out}$, 126) generated from the switching signals (124) and the ideal output voltage ($\bar{y}'_{out}$) is equal to the offset time ($T_l$) multiplied by the absolute value of the difference between the ideal output voltage ($\bar{y}'_{out}$) after and before the current transition (202, 500).

**8.** The converter system (100) of claim 7,
wherein the power semiconductor devices (136) comprise the power semiconductor switches (S1, S2, S3, S4, S5, S6).

**9.** The converter system (100) of claim 7 or 8,
wherein the power semiconductor devices (136) comprise freewheeling diodes (138) connected antiparallel to the power semiconductor switches (S1, S2, S3, S4, S5, S6).

**10.** The converter system (100) of one of claims 7 to 9,
wherein the controller (102) comprises an FPGA (112) in which at least the signal modification device (108) is implemented.

**11.** The converter system (100) of one of claims 7 to 10,

wherein the gate driver board (122) and the converter circuit (116) are configured to be part of a power electronics module (118) of the converter system (100);

wherein the characteristic data (130) and/or a lookup table for the offset time ($T_l$) is adapted to power semiconductor devices (136) assembled into the converter circuit (116).

12. The converter system (100) of one of claims 7 to 11,

wherein the gate driver board (122) comprises a non-volatile memory (140) configured to store the characteristic data (130) and/or a lookup table for the offset time ($T_l$);
wherein the gate driver board (122) and the controller (102) are interconnected for data communication such that the controller (102) configured in a way that it can read the characteristic data (130) and/or the lookup table for the offset time ($T_l$) from the non-volatile memory (140).

13. The converter system (100) of one of claims 7 to 12,

wherein the converter circuit (116) comprises a half-bridge circuit (120) configured to convert an input voltage (134) into an output voltage ($y_{out}$, 126) with multiple voltage levels;
wherein each of the voltage levels is encoded as a switching state in the input signal ($u_{in}$, 146).

14. The converter system (100) of claim 13,
wherein the half-bridge circuit (120) is configured to be a two-level half-bridge circuit, a three-level neutral-point-clamped half-bridge circuit or a three-level active-neutral-point-clamped half-bridge circuit.

**Patentansprüche**

1. Verfahren zum Steuern einer Umrichterschaltung (116), wobei das Verfahren Folgendes umfasst:

Empfangen eines Eingangssignals ($u_{in}$, 146), das Übergänge (202) zwischen Schaltzuständen der Umrichterschaltung (116) angibt, wobei jeder der Übergänge (202) eine Schaltzeit aufweist;
Erzeugen eines modifizierten Signals ($x_{in}$, 128) durch zusätzliches Verlagern jedes der Übergänge (202) um eine Versatzzeit ($T_l$), wobei die Versatzzeit ($T_l$) zu der Schaltzeit des Übergangs (202) addiert wird;
Erzeugen von Schaltsignalen (124) für Leistungshalbleiterschalter (S1, S2, S3, S4, S5, S6) der Umrichterschaltung (116) aus dem modifizierten Signal ($x_{in}$, 128); und
Anlegen der Schaltsignale (124) an die Leistungshalbleiterschalter (S1, S2, S3, S4, S5, S6), so dass eine Ausgangsspannung ($y_{out}$, 126) erzeugt wird;
wobei die Versatzzeit ($T_l$) anhand von Messdaten ($x_{s,m}$, 132) mindestens einer Zustandsvariable ($x_s$) der Umrichterschaltung (116) und anhand von Kenndaten (130), die einen Spannungsabfall von Leistungshalbleitervorrichtungen (136) der Umrichterschaltung (116) in Abhängigkeit von der mindestens einen Zustandsvariable ($x_s$) codieren, bestimmt wird;
wobei die Versatzzeit ($T_l$) so bestimmt wird, dass ein Zeitintegral einer Differenz ($\Delta y$) zwischen der Ausgangsspannung ($y_{out}$, 126) und einer idealen Ausgangsspannung ($\overline{y}'_{out}$) reduziert wird, wobei die ideale Ausgangsspannung ($\overline{y}'_{out}$) auf dem Eingangssignal ($u_{in}$, 146) und/oder dem modifizierten Signal ($x_{in}$, 128) basiert, wobei angenommen wird, dass die Leistungshalbleitervorrichtungen (136) ideal sind;
wobei die ideale Ausgangsspannung ($\overline{y}'_{out}$) für jeden der Übergänge (202) in dem Eingangssignal ($u_{in}$, 146) und/oder für jeden der Übergänge (500) in dem modifizierten Signal ($x_{in}$, 128) bestimmt wird;
**dadurch gekennzeichnet, dass**
die Versatzzeit ($T_l$) für einen Stromübergang (202, 500) so bestimmt wird, dass
die Differenz ($\Delta t$) eines Zeitpunkts ($t_2$) des Stromübergangs (202, 500) und eines Zeitpunkts ($t_1$) eines vorhergehenden Übergangs (202, 500) multipliziert mit der Differenz ($\Delta y$) der aus den Schaltsignalen (124) erzeugten Ausgangsspannung ($y_{out}$, 126) und der idealen Ausgangsspannung ($\overline{y}'_{out}$) gleich der Versatzzeit ($T_l$) multipliziert mit dem Absolutwert der Differenz zwischen der idealen Ausgangsspannung ($\overline{y}'_{out}$) nach und vor dem Stromübergang (202, 500) ist.

2. Verfahren nach Anspruch 1,
wobei die Kenndaten (130) einen Spannungsabfall eines Leistungshalbleiterschalters (S1, S2, S3, S4, S5, S6) der Umrichterschaltung (116) in Abhängigkeit von der mindestens einen Zustandsvariable ($x_s$) umfassen.

3. Verfahren nach Anspruch 1 oder 2,
wobei die Kenndaten (130) einen Spannungsabfall einer Diode (138) der Umrichterschaltung (116) in Abhängigkeit von der mindestens einen Zustandsvariable ($x_s$) umfassen.

4. Verfahren nach einem der vorhergehenden Ansprüche, wobei die mindestens eine Zustandsvariable ($x_s$) ein Ausgangsstrom und/oder eine Zwischenkreisspannung (134) und/oder eine Temperatur der Umrichterschaltung (116) ist.

5. Verfahren nach einem der vorhergehenden Ansprüche,

   wobei die Kenndaten (130) in einer Gate-Treiberplatine (122) gespeichert sind, die zum Erzeugen der Schaltsignale (124) ausgelegt ist; und/oder
   wobei eine Nachschlagetabelle für die Versatzzeit ($T_l$) in einer Gate-Treiberplatine (122) gespeichert ist, die zum Erzeugen und Anlegen der Schaltsignale (124) ausgelegt ist.

6. Verfahren nach einem der vorhergehenden Ansprüche, wobei das Eingangssignal ($u_{in}$, 146) mittels Pulsweitenmodulation, Schalten von Grundkomponenten und/oder Raumvektormodulation erzeugt wird.

7. Umrichtersystem (100), das Folgendes umfasst:

   eine Umrichterschaltung (116);
   eine Steuerung (102) mit einer Signalmodifikationsvorrichtung (108); und
   eine Gate-Treiberplatine (122);
   wobei die Signalmodifikationsvorrichtung (108) ausgelegt ist zum Empfangen eines Eingangssignals ($u_{in}$, 146), das Übergänge (202) zwischen Schaltzuständen der Umrichterschaltung (116) angibt, wobei jeder der Übergänge (202) eine Schaltzeit aufweist, und zum Erzeugen eines modifizierten Signals ($x_{in}$, 128) durch zusätzliches Verlagern jedes der Übergänge (202) um eine Versatzzeit ($T_l$), wobei die Versatzzeit ($T_l$) zu der Schaltzeit des Übergangs (202) addiert wird;
   wobei die Gate-Treiberplatine (122) ausgelegt ist zum Erzeugen von Schaltsignalen (124) für Leistungshalbleiterschalter (S1, S2, S3, S4, S5, S6) der Umrichterschaltung (116) aus dem modifizierten Signal ($x_{in}$, 128) und zum Anlegen der Schaltsignale (124) an die Leistungshalbleiterschalter (S1, S2, S3, S4, S5, S6), so dass eine Ausgangsspannung ($y_{out}$, 126) erzeugt wird;
   wobei die Versatzzeit ($T_l$) anhand von Messdaten ($x_{s,m}$, 132) mindestens einer Zustandsvariable ($x_s$) der Umrichterschaltung (116) und anhand von Kenndaten (130), die einen Spannungsabfall von Leistungshalbleitervorrichtungen (136) der Umrichterschaltung (116) in Abhängigkeit von der mindestens einen Zustandsvariable ($x_s$) codieren, bestimmt wird;
   wobei die Versatzzeit ($T_l$) so bestimmt wird, dass ein Zeitintegral einer Differenz ($\Delta y$) zwischen der Ausgangsspannung ($y_{out}$, 126) und einer idealen Ausgangsspannung ($\bar{y}'_{out}$) reduziert wird, wobei die ideale Ausgangsspannung ($\bar{y}'_{out}$) auf dem Eingangssignal ($u_{in}$, 146) und/oder dem modifizierten Signal ($x_{in}$, 128) basiert, wobei angenommen wird, dass die Leistungshalbleitervorrichtungen (136) ideal sind;
   **dadurch gekennzeichnet, dass**
   die ideale Ausgangsspannung ($\bar{y}'_{out}$) für jeden der Übergänge (202) in dem Eingangssignal ($u_{in}$, 146) und/oder für jeden der Übergänge (500) in dem modifizierten Signal ($x_{in}$, 128) bestimmt wird;
   wobei die Versatzzeit ($T_i$) für einen Stromübergang (202, 500) so bestimmt wird, dass die Differenz ($\Delta t$) eines Zeitpunkts ($t_2$) des Stromübergangs (202, 500) und eines Zeitpunkts ($t_1$) eines vorhergehenden Übergangs (202, 500) multipliziert mit der Differenz ($\Delta y$) der aus den Schaltsignalen (124) erzeugten Ausgangsspannung ($y_{out}$, 126) und der idealen Ausgangsspannung ($\bar{y}'_{out}$) gleich der Versatzzeit ($T_l$) multipliziert mit dem Absolutwert der Differenz zwischen der idealen Ausgangsspannung ($\bar{y}'_{out}$) nach und vor dem Stromübergang (202, 500) ist.

8. Umrichtersystem (100) nach Anspruch 7,
   wobei die Leistungshalbleitervorrichtungen (136) die Leistungshalbleiterschalter (S1, S2, S3, S4, S5, S6) umfassen.

9. Umrichtersystem (100) nach Anspruch 7 oder 8,
   wobei die Leistungshalbleitervorrichtungen (136) Freilaufdioden (138) umfassen, die mit den Leistungshalbleiterschaltern (S1, S2, S3, S4, S5, S6) antiparallel geschaltet sind.

10. Umrichtersystem (100) nach einem der Ansprüche 7 bis 9,
    wobei die Steuerung (102) ein FPGA (112) umfasst, in dem mindestens die Signalmodifikationsvorrichtung (108) implementiert ist.

**11.** Umrichtersystem (100) nach einem der Ansprüche 7 bis 10,

wobei die Gate-Treiberplatine (122) und die Umrichterschaltung (116) dazu ausgelegt sind, Teil eines Leistungselektronikmoduls (118) des Umrichtersystems (100) zu sein;
wobei die Kenndaten (130) und/oder eine Nachschlagetabelle für die Versatzzeit ($T_l$) an in die Umrichter-schaltung (116) montierte Leistungshalbleitervorrichtungen (136) angepasst sind.

**12.** Umrichtersystem (100) nach einem der Ansprüche 7 bis 11,
wobei die Gate-Treiberplatine (122) einen nichtflüchtigen Speicher (140) umfasst, der dazu ausgelegt ist, die Kenndaten (130) und/oder eine Nachschlagetabelle für die Versatzzeit ($T_l$) zu speichern; wobei die Gate-Treiberplatine (122) und die Steuerung (102) zur Datenkommunikation so miteinander verbunden sind, dass die Steuerung (102) so ausgelegt ist, dass sie die Kenndaten (130) und/oder die Nachschlagetabelle für die Versatzzeit ($T_l$) aus dem nichtflüchtigen Speicher (140) lesen kann.

**13.** Umrichtersystem (100) nach einem der Ansprüche 7 bis 12,

wobei die Umrichterschaltung (116) eine Halbbrückenschaltung (120) umfasst, die dazu ausgelegt ist, eine Eingangsspannung (134) in eine Ausgangsspannung ($y_{out}$, 126) mit mehreren Spannungspegeln umzuwandeln;
wobei jeder der Spannungspegel als ein Schaltzustand in dem Eingangssignal ($u_{in}$, 146) codiert ist.

**14.** Umrichtersystem (100) nach Anspruch 13,
wobei die Halbbrückenschaltung (120) dazu ausgelegt ist, eine zweistufige Halbbrückenschaltung, eine dreistufige neutralpunktgeklemmte Halbbrückenschaltung oder eine dreistufige aktivneutralpunktgeklemmte Halbbrückenschaltung zu sein.

**Revendications**

**1.** Procédé de commande d'un circuit convertisseur (116), le procédé comprenant :

la réception d'un signal d'entrée ($u_{in}$, 146) indiquant des transitions (202) entre des états de commutation du circuit convertisseur (116), chacune des transitions (202) ayant un temps de commutation ;
la génération d'un signal modifié ($x_{in}$, 128) en déplaçant en outre chacune des transitions (202) d'un temps de décalage ($T_l$), le temps de décalage ($T_l$) étant ajouté au temps de commutation de la transition (202) ;
la génération de signaux de commutation (124) pour des commutateurs à semi-conducteur de puissance (S1, S2, S3, S4, S5, S6) du circuit convertisseur (116) à partir du signal modifié ($x_{in}$, 128) ; et
l'application des signaux de commutation (124) aux commutateurs à semi-conducteur de puissance (S1, S2, S3, S4, S5, S6) de sorte à générer une tension de sortie ($y_{out}$, 126) ;
le temps de décalage ($T_l$) étant déterminé à partir de données de mesure ($x_{s,m}$, 132) d'au moins une variable d'état ($x_s$) du circuit convertisseur (116) et à partir de données caractéristiques (130) codant une chute de tension de dispositifs à semi-conducteur de puissance (136) du circuit convertisseur (116) en fonction de l'au moins une variable d'état ($x_s$) ;
le temps de décalage ($T_l$) étant déterminé de sorte à réduire une intégrale temporelle d'une différence ($\Delta y$) entre la tension de sortie ($y_{out}$, 126) et une tension de sortie idéale ($\overline{y}'_{out}$), la tension de sortie idéale ($\overline{y}'_{out}$) étant basée sur le signal d'entrée ($u_{in}$, 146) et/ou le signal modifié ($x_{in}$, 128) en supposant que les dispositifs à semi-conducteur de puissance (136) sont idéaux ;
la tension de sortie idéale ($\overline{y}'_{out}$) étant déterminée pour chacune des transitions (202) dans le signal d'entrée ($u_{in}$, 146) et/ou pour chacune des transitions (500) dans le signal modifié ($x_{in}$, 128) ;
**caractérisé en ce que**
le temps de décalage ($T_l$) pour une transition actuelle (202, 500) est déterminé de sorte que
le produit de la différence ($\Delta t$) d'un instant ($t_2$) de la transition actuelle (202, 500) et d'un instant ($t_1$) d'une transition précédente (202, 500) par la différence ($\Delta y$) de la tension de sortie ($y_{out}$, 126) générée à partir des signaux de commutation (124) et de la tension de sortie idéale ($\overline{y}'_{out}$) est égal au produit du temps de décalage ($T_l$) par la valeur absolue de la différence entre la tension de sortie idéale ($\overline{y}'_{out}$) après et avant la transition actuelle (202, 500).

**2.** Procédé selon la revendication 1,
dans lequel les données caractéristiques (130) comprennent une chute de tension d'un commutateur à semi-

## EP 3 926 803 B1

conducteur de puissance (S1, S2, S3, S4, S5, S6) du circuit convertisseur (116) en fonction de l'au moins une variable d'état ($x_s$).

3. Procédé selon la revendication 1 ou 2,
   dans lequel les données caractéristiques (130) comprennent une chute de tension d'une diode (138) du circuit convertisseur (116) en fonction de l'au moins une variable d'état ($x_s$).

4. Procédé selon l'une des revendications précédentes, dans lequel la variable d'état ($x_s$) est un courant de sortie et/ou une tension de liaison à courant continu (134) et/ou une température du circuit convertisseur (116).

5. Procédé selon l'une des revendications précédentes, dans lequel les données caractéristiques (130) sont stockées dans une carte de pilotage de grilles (122) adaptée à générer les signaux de commutation (124) ; et/ou
   dans lequel une table de correspondance pour le temps de décalage ($T_l$) est stockée dans une carte de pilotage de grilles (122) adaptée à générer et appliquer les signaux de commutation (124).

6. Procédé selon l'une des revendications précédentes, dans lequel le signal d'entrée ($u_{in}$, 146) est généré au moyen d'une modulation de largeur d'impulsion et/ou d'une commutation fondamentale et/ou d'une modulation vectorielle spatiale.

7. Système convertisseur (100), comprenant :

   un circuit convertisseur (116) ;
   un contrôleur (102) pourvu d'un dispositif de modification de signal (108) ; et
   une carte de pilotage de grilles (122) ;
   le dispositif de modification de signal (108) étant configuré pour recevoir un signal d'entrée ($u_{in}$, 146) indiquant des transitions (202) entre des états de commutation du circuit convertisseur (116), chacune des transitions (202) ayant un temps de commutation, et pour générer un signal modifié ($x_{in}$, 128) en déplaçant en outre chacune des transitions (202) d'un temps de décalage ($T_l$), le temps de décalage ($T_l$) étant ajouté au temps de commutation de la transition (202) ;
   la carte de pilotage de grilles (122) étant configurée pour générer des signaux de commutation (124) pour des commutateurs à semi-conducteur de puissance (S1, S2, S3, S4, S5, S6) du circuit convertisseur (116) à partir du signal modifié ($x_{in}$, 128) et pour appliquer les signaux de commutation (124) aux commutateurs à semi-conducteur de puissance (S1, S2, S3, S4, S5, S6) de sorte à générer une tension de sortie ($y_{out}$, 126) ;
   le temps de décalage ($T_l$) étant déterminé à partir de données de mesure ($x_{s,m}$, 132) d'au moins une variable d'état ($x_s$) du circuit convertisseur (116) et à partir de données caractéristiques (130) codant une chute de tension de dispositifs à semi-conducteur de puissance (136) du circuit convertisseur (116) en fonction de l'au moins une variable d'état ($x_s$) ;
   le temps de décalage ($T_l$) étant déterminé de sorte à réduire une intégrale temporelle d'une différence ($\Delta y$) entre la tension de sortie ($y_{out}$, 126) et une tension de sortie idéale ($\overline{y}'_{out}$), la tension de sortie idéale ($\overline{y}'_{out}$) étant basée sur le signal d'entrée ($u_{in}$, 146) et/ou le signal modifié ($x_{in}$, 128) en supposant que les dispositifs à semi-conducteur de puissance (136) sont idéaux ;
   **caractérisé en ce que**
   la tension de sortie idéale ($\overline{y}'_{out}$) est déterminée pour chacune des transitions (202) dans le signal d'entrée ($u_{in}$, 146) et/ou pour chacune des transitions (500) dans le signal modifié ($x_{in}$, 128) ;
   le temps de décalage ($T_l$) pour une transition actuelle (202, 500) étant déterminé de sorte que le produit de la différence ($\Delta t$) d'un instant ($t_2$) de la transition actuelle (202, 500) et d'un instant ($t_1$) d'une transition précédente (202, 500) par la différence ($\Delta y$) de la tension de sortie ($y_{out}$, 126) générée à partir des signaux de commutation (124) et de la tension de sortie idéale ($\overline{y}'_{out}$) est égal au produit du temps de décalage ($T_l$) par la valeur absolue de la différence entre la tension de sortie idéale ($\overline{y}'_{out}$) avant et après la transition actuelle (202, 500).

8. Système convertisseur (100) selon la revendication 7,
   dans lequel les dispositifs à semi-conducteur de puissance (136) comprennent les commutateurs à semi-conducteur de puissance (S1, S2, S3, S4, S5, S6).

9. Système convertisseur (100) selon la revendication 7 ou 8,
   dans lequel les dispositifs à semi-conducteur de puissance (136) comprennent des diodes de roue libre (138) connectées de manière antiparallèle avec les commutateurs à semi-conducteur de puissance (S1, S2, S3, S4, S5, S6).

18

**10.** Système convertisseur (100) selon l'une des revendications 7 à 9,
dans lequel le contrôleur (102) comprend un FPGA (112) où au moins le dispositif de modification de signal (108) est mis en œuvre.

**11.** Système convertisseur (100) selon l'une des revendications 7 à 10,

dans lequel la carte de pilotage de grilles (122) et le circuit convertisseur (116) sont configurés pour faire partie d'un module d'électronique de puissance (118) du système convertisseur (100) ;
dans lequel les données caractéristiques (130) et/ou une table de correspondance pour le temps de décalage ($T_l$) sont adaptées à des dispositifs à semi-conducteur de puissance (136) assemblés dans le circuit convertisseur (116).

**12.** Système convertisseur (100) selon l'une des revendications 7 à 11,

dans lequel la carte de pilotage de grilles (122) comprend une mémoire non volatile (140) configurée pour stocker les données caractéristiques (130) et/ou une table de correspondance pour le temps de décalage ($T_l$) ;
dans lequel la carte de pilotage de grilles (122) et le contrôleur (102) sont interconnectés pour la communication de données de sorte que le contrôleur (102) est configuré de manière à pouvoir lire les données caractéristiques (130) et/ou la table de correspondance pour le temps de décalage ($T_l$) à partir de la mémoire non volatile (140).

**13.** Système convertisseur (100) selon l'une des revendications 7 à 12,

dans lequel le circuit convertisseur (116) comprend un circuit en demi-pont (120) configuré pour convertir une tension d'entrée (134) en une tension de sortie ($y_{out}$, 126) à plusieurs niveaux de tension ;
dans lequel chacun des niveaux de tension est codé en tant qu'état de commutation dans le signal d'entrée ($u_{in}$, 146).

**14.** Système convertisseur (100) selon la revendication 13,
dans lequel le circuit en demi-pont (120) est configuré comme un circuit en demi-pont à deux niveaux, un circuit en demi-pont à trois niveaux clampé par le neutre ou un circuit en demi-pont à trois niveaux clampé activement par le neutre.

**Fig. 1**

## Fig. 2

## Fig. 3

# Fig. 4

# Fig. 5

# Fig. 6

# Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 20190229664 A1

**Non-patent literature cited in the description**

• **ANDRÉS MORA et al.** Dead-Time and Semiconductor Voltage Drop Compensation for Cascaded H-Bridge Converters. *IEEE Transactions on Industrial Electronics*, December 2016, vol. 63 (12)